# DEMANDE DE BREVET EUROPEEN

(11) **EP 2 863 049 A1**
(43) Date de publication de la demande: **22.04.2015**
(21) Numéro de dépôt: 14186643.4
(22) Date de dépôt: 26.09.2014
(51) Int. Cl.: F02N 11/08

(54) **DISPOSITIF D'ARRET ET DE REDEMARRAGE AUTOMATIQUE D'UN MOTEUR THERMIQUE DE VEHICULE AUTOMOBILE**

(30) Priorité: 21.10.2013 FR 1360213
(71) Demandeur: PEUGEOT CITROËN AUTOMOBILES SA, 78140 Velizy-Villacoublay (FR)
(72) Inventeur: Besseghair, Mehdi, 93310 Le Pré St Gervais (FR)

(57) **Abrégé**

L'invention concerne un dispositif d'arrêt et de redémarrage automatique d'un moteur (2) thermique de véhicule (1) automobile comprenant :
-une machine électrique (6) tournante destinée au redémarrage automatique du moteur (2) thermique,
-un calculateur (11) de contrôle du moteur relié à la machine électrique (6) tournante comprenant des moyens (13) pour délivrer à machine électrique (6) tournante un ordre de redémarrage automatique du moteur (2) thermique afin que ladite machine (6) effectue une première tentative de redémarrage du moteur thermique,

caractérisé en ce que la machine électrique (6) tournante comprend :
-des moyens (14) pour détecter un échec de redémarrage du moteur thermique et pour ordonner, en cas d'échec de redémarrage détecté, une seconde tentative de redémarrage du moteur thermique par la machine électrique (6) tournante, indépendamment du calculateur de contrôle moteur.

## Description

### Domaine technique de l'invention

La présente invention se rapporte au redémarrage automatique des moteurs à combustion interne, et plus particulièrement à la gestion des échecs de redémarrage automatique.

### Arrière-plan technologique

De façon à limiter la consommation de carburant et la pollution des moteurs à combustion interne, certains véhicules sont équipés d'une machine tournante électrique qui peut être un alterno-démarreur ou un alternateur réversible intégrant une fonction d'arrêt et de redémarrage automatique dite fonction « STOP & START ». L'arrêt du moteur est commandé automatiquement chaque fois que la vitesse du véhicule est pratiquement nulle ou lors des phases de ralenti et le moteur redémarre automatiquement suite à un besoin exprimé par le conducteur (par exemple action sur la pédale d'accélérateur ou relâchement de la pédale de frein, embrayage) ou suite à un besoin du véhicule (par exemple pour maintenir la température de certains éléments, pour maintenir le chauffage dans l'habitacle en hiver ou la climatisation en été ou pour maintenir la température du catalyseur et donc son efficacité).

Plus précisément, la fonction « STOP & START » peut se décomposer en trois phases :
- la phase de démarrage initiale du moteur à combustion interne que celui-ci soit du type à allumage commandé (moteur essence) ou à allumage par compression (moteur diesel). Cette phase initiale est encore appelée phase de premier démarrage,
- la phase d'arrêt : le système « STOP & START » coupe l'alimentation du moteur à combustion interne dès que le véhicule est à l'arrêt, le moteur étant en régime de ralenti, ou même dès qu'un arrêt est anticipé, par exemple dès que la vitesse du véhicule devient inférieure à un certain seuil bas de vitesse, ce qui permet de réduire la consommation de carburant et donc de limiter les émissions polluantes,
- la phase de redémarrage du moteur à combustion interne, commandée par la volonté du conducteur, marquée par exemple par l'enfoncement de la pédale d'embrayage ou de frein suite à un arrêt du moteur à combustion interne, ou suite à un besoin du véhicule, tel qu'un besoin en climatisation.

Lorsque le véhicule est en phase d'arrêt et que le conducteur souhaite redémarrer, le redémarrage automatique du moteur thermique est souvent opérationnel. Cependant il arrive que la machine tournante électrique n'arrive pas à redémarrer le moteur thermique pour des raisons diverses et variées telles que par exemple un problème interne à la machine tournante, une mauvaise adhérence entre la poulie et la courroie reliant la machine électrique au moteur thermique, etc....

Il existe un (ou des) calculateur(s) véhicules permettant de mémoriser des paramètres liés à ces redémarrages et pouvant également piloter la machine tournante électrique en conséquence.

Ce (ou ces) calculateur(s), en cas de détection d'échec de redémarrage séquence, demande à utiliser le démarreur pour le redémarrage du moteur, forçant ainsi le conducteur à redémarrer son véhicule à l'aide de sa clef de contact ou son bouton de démarrage.

Cependant, une telle procédure de fonctionnement a pour effet d'une part de diminuer la satisfaction du client car celui-ci doit redémarrer son véhicule lui-même plus souvent et d'autre part de limiter le gain en consommation que la fonction d'arrêt et de redémarrage automatique peut apporter à un véhicule en raison des inhibitions de la fonction et donc du maintien du fonctionnement du moteur thermique.

On connait le document FR2962770 qui décrit un dispositif de gestion du redémarrage automatique d'un moteur thermique par un alternateur réversible dans lequel un calculateur de contrôle moteur est apte à détecter un premier échec de redémarrage et apte à ordonner une seconde tentative de redémarrage par l'alternateur réversible. Dans cette configuration, la charge utilisée par le processeur du calculateur au cours de cette procédure peut-être trop élevée, ce qui peut pénaliser la commande d'autres fonctions aussi pilotées par le calculateur.

Pour cela, afin de résoudre cet inconvénient, il est prévu selon l'invention un dispositif d'arrêt et de redémarrage automatique d'un moteur thermique de véhicule automobile comprenant :
- une machine électrique tournante destinée au redémarrage automatique du moteur thermique,
- un calculateur de contrôle du moteur relié à la machine électrique tournante comprenant des moyens pour délivrer à machine électrique tournante un ordre de redémarrage automatique du moteur thermique afin que ladite machine effectue une première tentative de redémarrage du moteur thermique,
caractérisé en ce que la machine électrique tournante comprend :
- des moyens pour détecter un échec de redémarrage du moteur thermique et pour ordonner, en cas d'échec de redémarrage détecté, une seconde tentative de redémarrage du moteur thermique par la machine électrique tournante, indépendamment du calculateur de contrôle moteur.

Dans une variante, la machine électrique tournante comprend des moyens pour délivrer au calculateur un signal portant l'information de la seconde tentative de redémarrage du moteur thermique par la machine électrique tournante.

Dans une autre variante, le signal portant l'information de la seconde tentative de redémarrage du moteur thermique par la machine électrique tournante fait aussi office de temporisation entre la première tentative et de la seconde tentative de redémarrage.

Dans une autre variante, la machine électrique tournante comprend des moyens pour délivrer au calculateur un signal portant l'information de fin de tentative de redémarrage du moteur thermique par la machine électrique tournante.

Dans une autre variante, la machine électrique tournante comprend des moyens de surveillance du temps passé à fournir du couple pour tenter un redémarrage.

De préférence alors, les moyens de surveillance comprennent un gabarit qui définit une durée limite pendant laquelle la machine électrique tournante peut fournir du couple au cours d'une même tentative de redémarrage en fonction de la température de la machine électrique tournante et de son régime.

Dans une variante, la machine électrique tournante comprend un compteur d'échec de redémarrage.

Dans une variante, la machine tournante électrique est un alternateur réversible.

L'invention porte aussi sur un véhicule automobile équipé d'un moteur thermique, comprenant un dispositif d'arrêt et de redémarrage automatique du moteur thermique selon l'une quelconque des variantes précédemment décrites.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique en vue de dessus d'un véhicule équipé d'un moteur thermique ainsi que d'un dispositif d'arrêt et de redémarrage automatique d'un moteur thermique de l'invention.
- Les figures 2a à 2d représentent les relations en fonction du temps entre respectivement l'ordre de redémarrage automatique envoyé par le calculateur à l'alternateur, le régime Nₐₗₜ de l'alternateur réversible, le signal portant l'information de la seconde tentative de redémarrage du moteur thermique par l'alternateur réversible, le signal portant l'information de fin de tentative de redémarrage du moteur thermique par l'alternateur réversible.
- La figure 3 présente un exemple de gabarit définissant la limite de temps à ne pas dépasser en redémarrage en fonction de la température de l'alternateur réversible, pour un régime donné.

### Description détaillée

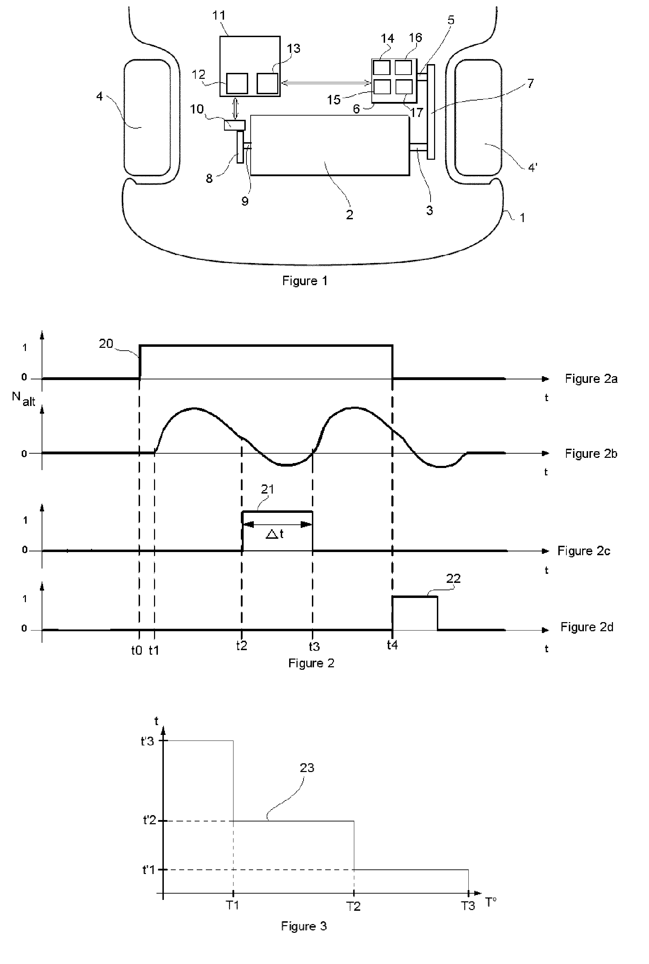

La figure 1 représente schématiquement un véhicule 1. Par exemple, le véhicule 1 est un véhicule automobile tel qu'une voiture. Ce véhicule 1 est équipé d'un moteur thermique, par exemple un moteur à combustion interne 2. Ce moteur 2 comporte un arbre 3 de transmission qui entraîne en rotation des roues motrices 4 et 4' du véhicule 1.

L'arbre 3 est mécaniquement raccordé à un arbre 5 d'un alternateur réversible 6 par l'intermédiaire d'une courroie d'entraînement 7. L'alternateur réversible 6 est conçu pour entraîner en rotation l'arbre 3 afin de permettre le redémarrage du moteur 2. L'usage d'un alternateur réversible a pour avantage d'avoir en une seule machine non seulement la fonctionnalité de redémarrage du moteur 2 thermique mais aussi celle de générateur de courant lorsque le véhicule 1 est en phase de roulage de façon à transformer une partie de l'énergie cinétique du véhicule 1 en énergie électrique. Une machine tournante électrique ayant la seule fonctionnalité de redémarrage peut cependant convenir.

Par ailleurs, le moteur thermique 2 comprend un volant moteur 8 solidaire du vilebrequin 9 et un démarreur 10 pouvant venir s'engrener au volant moteur 8 lors d'un ordre de démarrage par le conducteur au moyen de sa clef de contact ou de son bouton de démarrage.

Le véhicule 1 comprend également un calculateur 11 de contrôle du moteur thermique relié au démarreur 10. Le calculateur 11 comprend des moyens 12 pour piloter le démarrage du moteur thermique 2 par le démarreur 10. Le calculateur 11 comprend aussi des moyens 13 pour délivrer à l'alternateur réversible un ordre de redémarrage automatique du moteur thermique.

Le dispositif d'arrêt et de redémarrage automatique du moteur 2 thermique comprend donc l'alternateur 6 réversible, le calculateur et ses moyens 13 pour délivrer à l'alternateur réversible un ordre de redémarrage automatique du moteur thermique.

Conformément à l'invention, l'alternateur 6 réversible comprend encore des moyens 14 pour détecter un échec de redémarrage du moteur thermique et pour ordonner, en cas d'échec de redémarrage détecté, une seconde tentative de redémarrage du moteur thermique par l'alternateur 6 réversible. Dans cette configuration, l'ordre de seconde tentative de redémarrage du moteur thermique par l'alternateur 6 réversible est donné indépendamment du calculateur 11 de contrôle moteur. Le calculateur 11 n'a donc plus à gérer la seconde tentative de redémarrage automatique par l'alternateur, ce qui allège sa charge de fonctionnement. Le calculateur 11 est alors plus disponible pour d'autres tâches de contrôle du moteur 2.

Dans une situation de vie du véhicule 1 où le moteur 1 est déjà en arrêt automatique, par exemple parce qu'il est à un feu stop, un ordre de redémarrage peut être donné suite à la détection d'une volonté du conducteur du véhicule, différente de celle du démarrage par le démarreur, marquée par exemple par l'enfoncement de la pédale d'embrayage ou de frein suite à un arrêt du moteur à combustion interne, ou d'un besoin énergétique du véhicule. Le fonctionnement en cas de demande de redémarrage automatique, illustré par les figures 2a à 2d, est le suivant :
A t0, le calculateur 11 envoie à l'alternateur 6 réversible un ordre 20 de redémarrage automatique. A la réception de cet ordre l'alternateur 6 réversible procède à la première tentative de redémarrage, et à t1 l'alternateur 6 réversible initie sa rotation. Dans cet exemple, le régime Nalt de l'alternateur 6 réversible augmente dans un premier temps. Le régime Nalt est dans des conditions normales d'entrainement l'image, à un coefficient proportionnel près, du régime du moteur 2 thermique. Dans un deuxième temps, le régime Nalt de l'alternateur 6 réversible diminue, en raison, par exemple d'un blocage de la courroie 7.
A t2, l'alternateur 6 réversible détecte un échec du redémarrage. L'alternateur 6 réversible coupe alors la fourniture de couple et informe le calculateur 11 en lui envoyant un signal 21 portant l'information d'une seconde tentative de redémarrage du moteur 2 thermique par l'alternateur 6 réversible. Ainsi, l'alternateur 6 réversible comprend des moyens 14 pour délivrer au calculateur 11 le signal 20 portant l'information de la seconde tentative de redémarrage.

Avantageusement, le signal 21 fait aussi office de temporisation par sa durée, Δt, entre la première tentative et de la seconde tentative de redémarrage par l'alternateur 6 réversible.

A la fin de cette temporisation (instant t3 sur la figure 2), l'alternateur 6 réversible effectue une seconde tentative de redémarrage. Si cette seconde tentative est encore un échec (échec détecté à l'instant t4), alors dans ce cas, l'alternateur 6 réversible coupe alors la fourniture de couple et informe le calculateur 11 en lui envoyant un signal 22 portant l'information de fin de fin de tentative de redémarrage du moteur 2 thermique par l'alternateur 6 réversible. A cet effet, l'alternateur 6 réversible comprend donc aussi des moyens 15 portant l'information de fin de tentative de redémarrage du moteur 2 thermique par l'alternateur 6 réversible.

Dans ce cas, L'ordre de redémarrage automatique fournit par le calculateur 11 s'arrête dès que celui-ci reçoit le signal portant l'information de fin de tentative de redémarrage (instant t4 sur la figure 2a). Le démarrage du moteur 2 n'est alors autorisé par le calculateur 11 que par le démarreur 10, ce qui nécessite une action volontaire du conducteur du véhicule. Cette action volontaire peut être effectuée au moyen de clef de contact ou de son bouton de démarrage.

Les signaux 21 et 22 sont envoyés lorsque l'alternateur 6 réversible relève une évolution anormale de son régime Nalt et donc un problème de redémarrage. En effet, durant les phases de redémarrage, le stator et le rotor de l'alternateur 6 réversible sont parcourus par des courants intenses et l'alternateur 6 réversible n'est pas conçu pour supporter ces courants en continu. Il est donc prévu des moyens 16 de surveillance du temps passé par l'alternateur 6 réversible à fournir du couple pour tenter un redémarrage. Ces moyens peuvent déterminer si la durée de la tentative de redémarrage est trop longue et arrêter la fourniture de couple à tout moment en cas de durée trop longue.

Ces moyens de surveillance comprennent un gabarit qui définit une durée limite pendant laquelle l'alternateur 6 réversible peut fournir du couple au cours d'une même tentative de redémarrage en fonction de la température de l'alternateur 6 réversible et de son régime.

La figure 3 présente un exemple de gabarit du temps en fonction de la température, pour un régime donné. Dans l'exemple présenté, le gabarit est simplement basé sur des seuils de temps croissants, ici trois : t'1, t'2, t'3 associé à des seuils croissants de température, ici trois : T1, T2, T3 qui définissent une évolution de la durée limite 23 de temps en « escalier ».

Afin de pouvoir distinguer les différentes tentatives de redémarrage par l'alternateur 6 réversible, il est prévu que celui-ci dispose d'un compteur 17 du nombre d'échec de redémarrage.

Cette invention permet aussi une meilleure prestation du redémarrage automatique, puisque le redémarrage à l'aide d'un alternateur réversible est plus rapide qu'avec un démarreur standard, une transparence du premier échec de redémarrage automatique vis-à-vis du client. En effet, elle permet d'assurer la continuité de la fonction de redémarrage automatique en cas de mauvaises conditions furtives telles qu'une mauvaise adhérence de la courroie 7 d'entrainement aux poulies d'arbres 3, 5, non représentées. Elle permet une autonomie vis-à-vis du calculateur de contrôle du moteur permettant d'équiper ce dispositif sur des calculateurs différents et donc de réduire la spécificité entre les alternateurs réversibles et les calculateurs, ce qui est bénéfique pour la standardisation.

## Revendications

1. Dispositif d'arrêt et de redémarrage automatique d'un moteur (2) thermique de véhicule (1) automobile comprenant :
- une machine électrique (6) tournante destinée au redémarrage automatique du moteur (2) thermique,
- un calculateur (11) de contrôle du moteur relié à la machine électrique (6) tournante comprenant des moyens (13) pour délivrer à machine électrique (6) tournante un ordre de redémarrage automatique du moteur (2) thermique afin que ladite machine (6) effectue une première tentative de redémarrage du moteur thermique,
**caractérisé en ce que** la machine électrique (6) tournante comprend :
- des moyens (14) pour détecter un échec de redémarrage du moteur thermique et pour ordonner, en cas d'échec de redémarrage détecté, une seconde tentative de redémarrage du moteur thermique par la machine électrique (6) tournante, indépendamment du calculateur de contrôle moteur.

2. Dispositif selon la revendication 1, **caractérisé en ce que** la machine électrique (6) tournante comprend des moyens (14) pour délivrer au calculateur (11) un signal (21) portant l'information de la seconde tentative de redémarrage du moteur (2) thermique par la machine électrique (6) tournante.

3. Dispositif selon la revendication 1 ou la revendication 2, **caractérisé en ce que** le signal (21) portant l'information de la seconde tentative de redémarrage du moteur (2) thermique par la machine électrique (6) tournante fait aussi office de temporisation entre la première tentative et de la seconde tentative de redémarrage.

4. Dispositif selon l'une quelconque des revendications précédentes, **caractérisé en ce que** la machine électrique (6) tournante comprend des moyens (15) pour délivrer au calculateur (11) un signal (22) portant l'information de fin de tentative de redémarrage du moteur (2) thermique par la machine électrique (6) tournante.

5. Dispositif selon l'une quelconque des revendications précédentes, **caractérisé en ce que** la machine électrique (6) tournante comprend des moyens (16) de surveillance du temps passé à fournir du couple pour tenter un redémarrage.

6. Dispositif selon la revendication 5, **caractérisé en ce que** les moyens (16) de surveillance comprennent un gabarit qui définit une durée (23) limite pendant laquelle la machine électrique (6) tournante peut fournir du couple au cours d'une même tentative de redémarrage en fonction de la température de la machine électrique (6) tournante et de son régime.

7. Dispositif selon l'une quelconque des revendications précédentes, **caractérisé en ce que** la machine électrique (6) tournante comprend un compteur (17) d'échec de redémarrage.

8. Dispositif selon l'une quelconque des revendications précédentes, **caractérisé en ce que** la machine tournante électrique est un alternateur (6) réversible.

9. Véhicule (1) automobile équipé d'un moteur (2) thermique, **caractérisé en ce qu'**il comprend un dispositif d'arrêt et de redémarrage automatique du moteur (2) thermique selon l'une quelconque des revendications précédentes.
